# EUROPÄISCHE PATENTSCHRIFT

(11) **EP 1 231 118 B1**
(45) Veröffentlichungstag und Bekanntmachung des Hinweises auf die Patenterteilung: **02.05.2007**
(21) Anmeldenummer: 02100072.4
(22) Anmeldetag: 29.01.2002
(51) Int. Cl.: B60T 7/04, B60T 7/10, B60T 13/74, F16D 65/21, B60T 8/32

(54) **Elektromechanische Bremsvorrichtung, insbesondere für Kraftfahrzeuge**
Electromechanical brake device, especially for motor vehicles
Dispositif de freinage électromécanique notamment pour véhicules automobiles

(30) Priorität: 13.02.2001 DE 10106620
(43) Veröffentlichungstag der Anmeldung: 14.08.2002
(73) Patentinhaber: SIEMENS AKTIENGESELLSCHAFT, 80333 München (DE)
(72) Erfinder: Kucera, Markus, Dr., 93059 Regensburg (DE); Lang, Hans, 93055 Regensburg (DE)

(56) Entgegenhaltungen:
- EP-A- 1 138 971
- DE-A- 3 410 006
- DE-C- 19 615 186
- US-A- 4 658 939
- PATENT ABSTRACTS OF JAPAN Bd. 018, Nr. 147 (M-1575) 11 M{rz 1994 & JP 05 321 961 A (TOYOTA MOTOR CORP) 07 Dezember 1993

## Beschreibung

Die Erfindung betrifft eine elektromechanische Bremsvorrichtung, insbesondere für Kraftfahrzeuge, nach dem Oberbegriff des Patentanspruchs 1, wie z.B. aus DE-A-3410006 bekannt.

Elektromechanische Bremsvorrichtungen sind beispielsweise aus der DE 196 15 186 C1 sowie der DE 195 29 664 A1 bekannt. Bei diesen bekannten Bremsvorrichtungen wird die rotatorische Bewegung der Rotorwelle eines die Bremskraft erzeugenden Elektromotors über einen Spindeltrieb in eine translatorische Bewegung eines Bremskolbens umgesetzt, der bei Aktivierung des Elektromotors Bremsbeläge gegen eine Bremsscheibe andrückt und dadurch ein Bremsmoment erzeugt. Im Antriebsstrang zwischen dem Elektromotor und dem Bremskolben, vorzugsweise zwischen dem bremsseitigen Abtrieb der Rotorwelle und dem elektromotorseitigen Antrieb des Spindeltriebs, kann zur Verstärkung der translatorischen Bremskraft eine mechanische Übersetzung, insbesondere ein Getriebe, vorgesehen sein.

Bremsvorrichtungen der vorgenannten Art benötigen eine Notbremse, die bei Ausfall der elektrischen Energiequelle oder einer Störung im elektrischen System ein Abbremsen des Fahrzeugs ermöglicht. Hierzu ist es aus der DE 196 20 344 A1 sowie der DE 39 41 400 C2 bei herkömmlichen hydraulisch mechanischen Feststellbremsen bekannt, zwei Bremsbacken der hydraulischen Betriebsbremse mittels Zusatzeinrichtungen mechanisch gegen die Innenwand einer Bremstrommel anzudrücken. Hierzu sind die Bremsbacken zur Feststellbremsung in einer Bremsstellung durch elektrische Betätigung mechanisch verriegelbar.

Weiterhin ist aus der nicht vorveröffentlichten DE 100 15 263 A1 eine elektromechanische Bremsvorrichtung bekannt, bei der die Zusatz- oder Notbremse als mechanisch an die Rotorwelle des Elektromotors ankoppelbare Bremse ausgebildet ist, über die die Rotorwelle bei Ausfall des Elektromotors so verdrehbar ist, dass dieses Verdrehen der Rotorwelle über einen Spindeltrieb den Bremskolben in Bremsrichtung verlagert.

Der Erfindung liegt die Aufgabe zugrunde, eine sicher und zuverlässig arbeitende Zusatzbremse für eine elektromechanische Bremsvorrichtung zu schaffen, die einfach aufgebaut ist und mit geringem Montageaufwand einzubauen ist.

Die Aufgabenstellung wird erfindungsgemäß durch die im Patentanspruch 1 genannten Merkmale gelöst.

Vorteilhafte Ausgestaltungen der Bremsvorrichtung werden in den Unteransprüchen beschrieben.

Bei der erfindungsgemäßen Bremsvorrichtung besteht die Zusatzbremse aus einer mechanischen Kopplung des Bremspedals mit dem Bremskolbenantrieb, wobei in die mechanische Kopplung ein Kraftbegrenzer integriert ist. Diese kostengünstige Lösung zur Herstellung einer wirksam arbeitenden Zusatzbremse wird durch einfache Betätigung des Bremspedals aktiviert. Sie ist dabei so ausgelegt, dass sie stets parallel zum elektrischen Betrieb der elektromechanische Bremsvorrichtung arbeitet, ihre Wirkung aber nur dann zur Geltung kommt, wenn das elektrische System beispielsweise wegen eines Defekts nicht arbeitet.

Weitere Merkmale und Vorteile der Erfindung ergeben sich aus der nachfolgenden Beschreibung der zugehörigen Zeichnung, in der ein Ausführungsbeispiel einer erfindungsgemäßen Bremsvorrichtung nur beispielhaft schematisch dargestellt ist. In der Zeichnung zeigt:
- Figur 1: einen schematischen Längsschnitt durch eine elektromechanische Bremsvorrichtung und
- Figur 2: eine schematische Ansicht der Ankopplung einer erfindungsgemäßen Zusatzbremse an eine Bremsvorrichtung gemäß Figur 1.

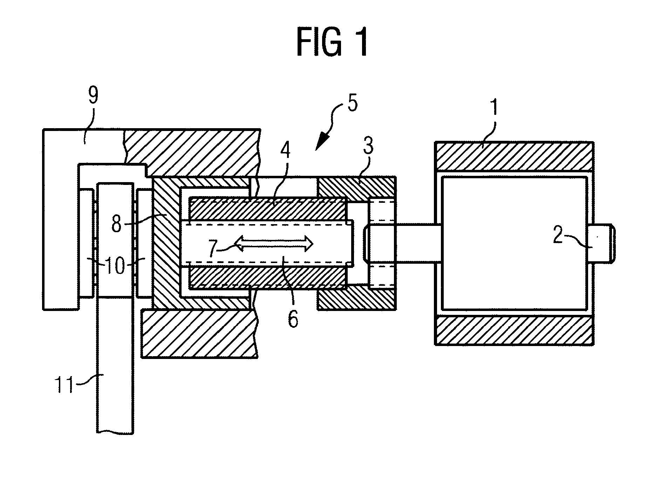

Figur 1 zeigt im Längsschnitt schematisch den Aufbau einer elektromechanischen Bremsvorrichtung. Diese Bremsvorrichtung besteht im wesentlichen aus einem Elektromotor 1, dessen Rotorwelle 2 über ein Getriebe 3 eine axial fixierte Spindelmutter 4 antreibt, die einen Teil eines Bremskolbenantriebs 5 bildet. Beim dargestellten Ausführungsbeispiel ist das Getriebe 3 als Planetengetriebe ausgelegt.

Die Spindelmutter 4 steht in Antriebsverbindung mit einer Spindelwelle 6, die einen weiteren Teil des Bremskolbenantriebs 5 darstellt. Bei Erregung des Elektromotors 1 wird die Rotationsbewegung der Rotorwelle 2 über das Getriebe 3 auf den Bremskolbenantrieb 5 übertragen, der über den aus Spindelmutter 4 und Spindelwelle 6 bestehenden Spindeltrieb diese Rotationsbewegung in eine translatorische Bewegung in die mit dem Pfeil 7 gekennzeichnete Axialrichtung der Spindelwelle 6 umsetzt.

Die Spindelwelle 6 ihrerseits ist mit einem Bremskolben 8 verbunden, der in der Abbildung nur schematisch dargestellt ist. Über den Bremskolben 8 werden bei Betätigung der Bremse die an einem Bremsbelagträger 9 angeordneten Bremsbeläge 10 an eine Bremsscheibe 11 angedrückt und so bei normalem Bremsbetrieb ein Bremsmoment an der Bremsscheibe 11 erzeugt.

Da eine solche dargestellte elektromechanische Bremsvorrichtung nur dann eine Bremswirkung erzeugen kann, wenn die Rotorwelle 2 über den Elektromotor 1 angetrieben wird, ist es für den Fall des Ausfalls der elektrischen Energiequelle oder einer Störung im elektrischen System notwendig, eine Zusatzoder Notbremse 12 vorzusehen, über die das mit dieser Bremsvorrichtung versehene Fahrzeug unabhängig vom elektrischen System abgebremst werden kann.

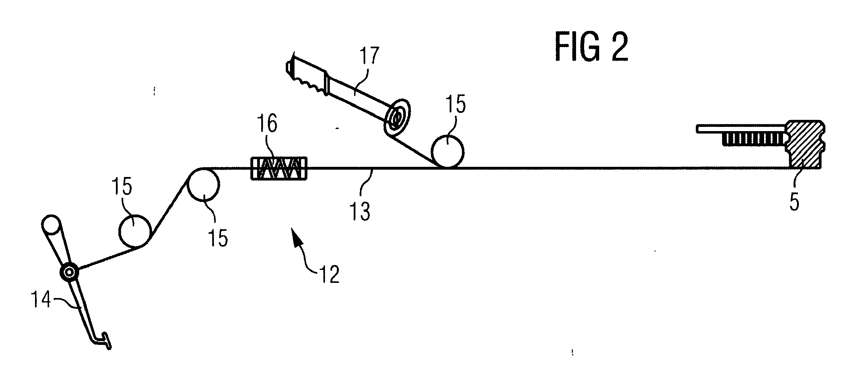

Figur 2 zeigt schematisch die Ankopplung einer solchen mechanisch wirkenden Zusatzbremse 12 an eine elektromechanische Bremsvorrichtung gemäß Figur 1.

Bei der dargestellten Ausführungsform besteht diese Zusatzbremse 12 aus einer als Seilzug 13 ausgebildeten mechanischen Kopplung zwischen dem Bremskolbenantrieb 5 einerseits und einem Bremspedal 14 andererseits. Der Seilzug 13 kann dabei beispielsweise gemäß einer aus der eingangs erwähnten DE 100 15 263 A1 bekannten Art an den Bremskolbenantrieb 5 angekoppelt sein. Der Seilzug 13 ist über Umlenkrollen 15 geführt so mit dem Bremskolbenantrieb 5 verbunden, dass bei einer Betätigung des Bremspedals 14 der Bremskolbenantrieb 5 zu einer Bewegung in Bremsrichtung aktiviert wird. Solange aber der Elektromotor 1 elektrisch erregt wird, die Bremsvorrichtung also ordnungsgemäß arbeitet, greift diese mechanische Betätigung des Bremskolbenantriebs 5 nicht durch, da aufgrund der elektrischen Betätigung des Bremskolbenantriebs 5 keine Kraft über den Seilzug 13 übertragen wird.

Die Zusatzbremse 12 ist dabei weiterhin so ausgelegt, dass sie den Bremskolbenantrieb 5 automatisch wieder freigibt, sobald das Bremspedal 14 nicht mehr betätigt wird.

Beim Einsatz einer solchen Zusatzbremse 12 bei einer mit einem Antiblockiersystem (ABS-System) ausgerüsteten Bremsvorrichtung, bei der ein blockierfreies Bremsen dadurch ermöglicht wird, dass die Bremsvorrichtung in Sekundenbruchteilen die Bremsbeläge 10 intervallartig gegen die Bremsscheibe 11 oder die Bremsfläche einer Bremstrommel andrückt und wieder löst, muss sichergestellt sein, dass entgegen der fortlaufenden Betätigung des Bremspedals 14 und somit der fortlaufenden Aktivierung der Zusatzbremse 12 das Öffnen des Bremskolbenantriebs 5 entgegen der Betätigungskraft der Zusatzbremse 12 möglich ist.

Zu diesem Zweck ist bei dem dargestellten Ausführungsbeispiel ein Kraftbegrenzer 16 in die mechanische Kopplung zwischen dem Bremspedal 14 und dem Bremskolbenantrieb 5 integriert. Über diesen im vorliegenden Fall als Feder ausgebildeten Kraftbegrenzer 16 kann die Betätigungskraft der Zusatzbremse 12 soweit begrenzt werden, dass der Bremskolbenantrieb 5 bedingt durch das ABS-System öffnen kann, obwohl die Zusatzbremse 12 betätigt wird. Der Fahrer des Fahrzeugs erhält so auch eine haptische Rückmeldung über den Eingriff des ABS-Systems.

Um zu verhindern, dass ein als Feder ausgebildeter Kraftbegrenzer 16 möglicherweise überdehnt wird, kann der Pedalweg des Bremspedals 14 über einen Anschlag begrenzt werden.

Eine besonders einfache und montagefreundliche Art der Ankopplung der Zusatzbremse 12 an den Bremskolbenantrieb 5 ist in Figur 2 dargestellt. Bei dieser Ausführungsform ist die Zusatzbremse 12 an eine vorhandene Bremseinrichtung einer Feststellbremse 17 angekoppelt. Bei dieser Art der Ankopplung der Zusatzbremse 12 ist darauf zu achten, dass ein möglicherweise verwendeter Kraftbegrenzer 16 im Bereich zwischen Bremspedal 14 und der Feststellbremse 17 angeordnet ist, damit gewährleistet ist, dass die Feststellbremse 17 unabhängig von der Pedalstellung des Bremspedals 14 betätigt werden kann und seine volle Bremskraft erzeugen kann.

Eine solchermaßen ausgestaltete Zusatzbremse 12 für eine elektromechanische Bremsvorrichtung zeichnet sich dadurch aus, dass sie einfach aufgebaut ist und ihre Betätigung einfach über das Bremspedal 14 erfolgt.

## Patentansprüche

1. Elektromechanische Bremsvorrichtung, insbesondere für Kraftfahrzeuge, mit einem über einen Antrieb (5) verlagerbaren Bremskolben (8), wobei der Antrieb (5) die Rotationsbewegung einer Rotorwelle (2) eines Elektromotors (1) in eine translatorische Bewegung umsetzt, sowie mit einer mechanisch betätigbaren Zusatzbremse (12), wobei ein Bremspedal (14) und der Bremskolbenantrieb (5) die Zusatzbremse (12) bildend derart mechanisch miteinander gekoppelt sind, dass bei Betätigung des Bremspedals (14) die Zusatzbremse (12) den Bremskolben (8) ausschließlich dann in Bremsrichtung verlagert, wenn der Bremskolbenantrieb (5) elektrisch nicht aktiviert ist, **dadurch gekennzeichnet, dass** in die mechanische Kopplung ein Kraftbegrenzer (16) integriert ist.

2. Elektromechanische Bremsvorrichtung nach Anspruch 1, **dadurch gekennzeichnet, dass** die mechanische Kopplung zwischen Bremspedal (14) und Bremskolbenantrieb (5) als Seilzug (13) ausgebildet ist.

3. Elektromechanische Bremsvorrichtung nach Anspruch 1 oder 2, **dadurch gekennzeichnet, dass** der Bremskolbenantrieb (5) den Bremskolben (8) beim Lösen des Bremspedals (14) automatisch freigibt.

4. Elektromechanische Bremsvorrichtung nach mindestens einem der Ansprüche 1 bis 3, **dadurch gekennzeichnet, dass** der Bremskolbenantrieb (5) als Spindeltrieb (4, 6) ausgebildet ist.

5. Elektromechanische Bremsvorrichtung nach einem der vorhergehenden Ansprüche, **dadurch gekennzeichnet, dass** der Kraftbegrenzer (16) als Feder ausgebildet ist.

6. Elektromechanische Bremsvorrichtung nach mindestens einem der Ansprüche 1 bis 5, **dadurch gekennzeichnet, dass** der Pedalweg des Bremspedals (14) über einen Anschlag begrenzbar ist.

7. Elektromechanische Bremsvorrichtung nach mindestens einem der Ansprüche 1 bis 6, **dadurch gekennzeichnet, dass** die Zusatzbremse (12) an eine vorhandene Feststellbremse (17) ankoppelbar ist.

8. Elektromechanische Bremsvorrichtung nach Anspruch 7, **dadurch gekennzeichnet, dass** der Kraftbegrenzer (16) zwischen dem Bremspedal (14) und der Feststellbremse (17) angeordnet ist.

## Claims

1. Electromechanical brake device, especially for motor vehicles, with a brake piston (8) able to be displaced via a drive (5), with the drive (5) converting the rotational movement of a rotor shaft (2) of an electric motor (1) into a translational movement, as well as with a mechanically actuatable auxiliary brake (12), with a brake pedal (14) and the brake piston drive (5) forming the auxiliary brake (12) being mechanically coupled to each other such that, on actuation of the brake pedal (14) the auxiliary brake (12) exclusively only moves the brake piston (8) in the braking direction if the brake piston drive (5) is not electrically actuated, **characterized in that** a force limiter (16) is integrated into the mechanical coupling.

2. The electromechanical brake device according to claim 1, **characterized in that** the mechanical coupling between brake pedal (14) and brake piston drive (5) is embodied as a cable pull (13).

3. The electromechanical brake device according to claim 1 or 2, **characterized in that** the brake piston drive (5) automatically releases the brake piston (8) on release of the brake pedal (14).

4. The electromechanical brake device according to at least one of claims 1 to 3, **characterized in that** the brake piston drive (5) is embodied as a spindle drive (4, 6).

5. The electromechanical brake device according to one of the previous claims, **characterized in that** the force limiter (16) is embodied as a spring.

6. The electromechanical brake device according to at least one of claims 1 to 5, **characterized in that** the pedal travel of the brake pedal (14) can be limited via a stop.

7. The electromechanical brake device according to at least one of claims 1 to 6, **characterized in that** the auxiliary brake (12) can be linked to an existing parking brake (17).

8. The electromechanical brake device according to claim 7, **characterized in that** the force limiter (16) is arranged between the brake pedal (14) and the parking brake (17).

## Revendications

1. Dispositif de frein électromécanique, en particulier pour véhicule automobile, comportant un piston de frein (8) pouvant se déplacer au moyen d'un entraînement (5), l'entraînement (5) transformant le mouvement de rotation d'un arbre de rotor (2) d'un moteur électrique '1) en un mouvement de translation, comportant également un frein auxiliaire (12) pouvant âtre actionné mécaniquement, une pédale de frein (14) et l'entraînement de piston de frein (5) étant couplés l'une avec l'autre mécaniquement en formant le frein auxiliaire (12), de telle façon que lorsque la pédale de frein (14) est actionnée, le frein auxiliaire (12) déplace alors exclusivement le piston de frein (8) dans le sens de freinage, si l'entraînement de piston de frein (5) n'est pas activé électriquement,
**caractérisé en ce qu'**un limiteur de force (16) est intégré dans l'accouplement mécanique.

2. Dispositif de frein électromécanique suivant la revendication 1, **caractérisé en ce que** l'accouplement mécanique est réalisé entre la pédale de frein (14) et l'entraînement de piston de frein (5) sous la forme d'une commande par câble (13).

3. Dispositif de frein électromécanique suivant la revendication 1 ou 2, **caractérisé en ce que** l'entraînement du piston de frein (5) libère automatiquement le piston de frein (8) lorsque la pédale de frein (14) est libérée.

4. Dispositif de frein électromécanique suivant l'une des revendications 1 à 3, **caractérisé en ce que** l'entraînement de piston de frein (5) est réalisé sous la forme d'un entraînement par engrenage hélicoïdal (4, 6).

5. Dispositif de frein électromécanique suivant l'une des revendications précédentes, **caractérisé en ce que** le limiteur de force (16) est réalisé sous la forme d'un ressort.

6. Dispositif de frein électromécanique suivant l'une des revendications 1 à 5, **caractérisé en ce que** la course de la pédale de frein (14) peut être limitée au moyen d'une butée.

7. Dispositif de frein électromécanique suivant au moins l'une des revendications 1 à 6, **caractérisé en ce que** le frein auxiliaire (12) peut être accouplé à un frein de stationnement (17) existant.

8. Dispositif de frein électromécanique suivant la revendication 7, **caractérisé en ce que** le limiteur de force (16) est disposé entre la pédale de frein (14) et le frein de stationnement (17).
